# EUROPEAN PATENT SPECIFICATION

(11) **EP 1 642 024 B1**
(45) Date of publication and mention of the grant of the patent: **30.12.2015**
(21) Application number: 04748769.9
(22) Date of filing: 25.06.2004
(51) Int. Cl.: F03B 13/08, B63H 23/24

(54) **WATER TURBINE AND LIQUID PUMP**
WASSERTURBINE UND FLÜSSIGKEITSPUMPE
TURBINE HYDRAULIQUE ET POMPE A LIQUIDE

(30) Priority: 25.06.2003 NO 20032919
(43) Date of publication of application: 05.04.2006
(73) Proprietor: Sinvent AS, 7465 Trondheim (NO)
(72) Inventor: ROYRVIK, Johnny, N-7049 Trondheim (NO); NIELSEN, Torbjörn, N-7020 Trondheim (NO)
(74) Representative: Heggstad, Jon Dagson
(86) International application number: PCT/NO2004/000193
(87) International publication number: WO 2004/113717

(56) References cited:
- EP-A1- 0 115 045
- EP-A1- 0 566 787
- EP-A1- 0 657 654
- EP-A1- 0 977 343
- EP-A2- 0 867 361
- WO-A2-03/025385
- DE-A1- 3 718 954

## Description

The invention relates to an apparatus in accordance with the introductory part of patent claim 1, for converting of potential energy of stored water to electrical energy or vice versa. Such an apparatus can also be called a flow machine (hydroelectric machine), which either can function as a water turbine with generator or as a motor with liquid pump.

### State of the art

Swiss patent specification 606.793 describes an apparatus with a tube-type turbine or pump, which contains a single wheel with a mainly horizontal axis and with non-adjustable blades. With this flow machine one can, using it as a turbine, convert potential energy of stored water to electrical energy and, using it as a pump, convert electrical energy to kinetic energy in water. This solution however has low effectiveness.

Swiss patent specification 606.801 describes a similar apparatus with a tube-type turbine or pump. With this apparatus, however, the blades of the wheel are carried out adjustable. With this flow machine the wheel is journalled in the inner of a stationary hub, which supports the guide blades and creates space for the end of the wheel's shaft. Neither this solution results in a satisfactory effectiveness.

From US-patent specification 3.353.028 (Braikevitch et aL 1964) it is known to mount a centrally supported turbine wheel with an outer ring which, by magnetic coupling, pulls with it a rotor ring with permanent magnets. The rotor ring is supported by ball bearings. Arranged upstream in front of the turbine wheel are stationary guide blades. This design is not exceptionally favourable, neither in view of the assembling costs nor in view of efficiency and maintenance.

From US-patent specification 3.422.275 (Braikevitch et al. 1965) it is known a similar turbine which also is centrally supported and which is provided with adjustable guide blades, but as for the rest with a corresponding structure as the water turbine mentioned before.

From SE-patent application 9600118 (Nilsson 1996) it is known to use two contra-rotating turbine wheels which are mechanically coupled with a fixed gearing. This turbine has a central. support and axles which transmit the torque to an external generator. This design is fixed in view of its structure, the number of turbine wheels and operating condition and will have low efficiency.

### Object

The main aim of the invention is to create a flow machine as quoted in the introduction, with the possibility for two or more contra-rotating wheels, the machine can be used as a turbine and pump, and it is possible to obtain a better efficiency compared with corresponding known apparatuses.

It is also an aim to create a rotor-stator structure and a bearing which makes it possible to avoid sealing solutions which can result in leakage and maintenance problems.

Further it is an aim to create an apparatus which is prepared for modular design, so that a given apparatus can be assembled in a flexible way with modular units. Such modular units must be designed to be removed for the purpose of replacement or repairs with so little work as possible.

Finally an apparatus of that kind in question must be able to be assembled with the lowest possible constructional and economical effort, which, among other things, requires a constructionally simple and cheap solution for the bearing of the rotating elements.

### Invention

The invention is stated in patent claim 1, while patent claims 2-14 quote especially favourable features of the invention.

In the following the advantages of the invention are described especially in connection with the application as water turbine with generator. But corresponding effects can also be obtained with its use as a pump.

With the use of the apparatus according to the invention it is possible, among other things by choice of a number of mutually independent, especially contra-rotating wheels, to convert energy in water with a considerably better efficiency than it is the case with the known apparatus. Additionally the apparatus according to the invention makes it possible to utilize higher pressures and/or head of water in an energy-relevant favourable manner than those which have been possible with the known water turbines, especially tube-type turbines.

An important advantage consists in the possibility for better assembling of the generator units and the individual wheels than it is possible with the apparatus according to the swedish patent application 9600118, and in this way to increase the efficiency.

A further advantage consists in the kind of bearing which becomes more simple and requires less maintenance than known central bearings.

Finally the use of modular units results in a more efficient production and assembling.

For obtaining optimal results with energy conversion it is necessary to adapt the most important components of the flow machine according to the invention to the energy-relevant and constructional circumstances at the operational area.

With the apparatus according to the invention, in the operating mode as a turbine, it will be obtained a reduction of the water pressure carried out stepwise, so that it is possible, with a corresponding combination of two or more turbine elements, which can be connected axially with each other, to obtain the best possible energy output and optimal efficiency of the energy conversion. The water which had flown through the wheels and has passed them contains practically no useable pressure and kinetic energy.

Especially with the use of more than two turbine elements a certain gradation of the degree of reaction of the following wheels may possibly be necessary to provide an optimal energy conversion.

That what is described above in connection with the application of the flow machine as a turbine is in a corresponding way - with certain modifications and/or corresponding changes - also valid in case of its use as a pump, where the electrical generator becomes a motor.

In connection with the water lubricated hydrodynamic gliding-surface bearing with which the apparatus according the invention is provided, it is found, that, also in the case of a sideways not completely closed design of the apparatus, not only the wanted bearing effect can be obtained, but additionally it is also possible, to obtain an operational permanent flow through this space between the moving and the non-moving elements - i.e. between the area of the rim of the rotating unit and the stationary part of the apparatus - in a certain flow direction. For obtaining such a function with gliding-surface bearings connections and understandings as known per se from the theory of hydrodynamics concerning bearings are used.

With a preferred embodiment of the hydrodynamic gliding-surface bearing a part of the water which flows through the apparatus serves as a lubricant for the gliding-surface bearing. As for the rest it is also possible to design the gliding-surface bearings in such a way that the space between the parts of the gliding-surface bearing will be flown through in a predestined direction by the water which serves as a lubricant. In connection with such a design of the gliding-surface bearing it shall be added that, as a result of the continuous flow through the gap of the gliding-surface bearing, it can be obtained cooling of the coils of the generator or motor in question as well as cooling of the permanent magnets of the rotor can be achieved.

For reducing the frictional losses the side areas concerned of such a gliding-surface bearing can be provided with a friction reducing coating, for example teflon or a material with similar effect. Such a coating can also be advantageous in case of the cylindrically formed bearing areas which is essential for the hydrodynamical counter pressure which generates supporting forces for the horizontally arranged rotating unit. This is because a hydrodynamic gliding-surface bearing reaches its effect only with a sufficient rotation/rotational speed of the moving element, so that from the beginning of its operation to that moment where this effect starts (lowest point in the Stribeck-diagram) there is a mixed friction the magnitude of which can be considerably reduced with a friction reducing coating at those surfaces which contact each other.

Within the scope of the present invention, the wheel of the flow machine, which is designed as a tube-type turbine, contains one outer bearing only, this means one bearing exclusively provided in the area of the rim of the rotating unit. Additionally it is also possible to arrange a bearing in the area of the hub of the wheel, if this should be necessary, e.g. to be able to mechanically adjust the blades of the wheel through the hub.

To avoid unnecessary formation of vorteces and with it loss of energy and in addition to achieve a compact structure of the tube-type turbine the hub of the wheel has mainly the same outer cross-section. Moreover it is adavantageous for this object, that the adjacent ends of the hubs of the wheel have a relatively short distance from each other.

The coupling of the generator or rotor coils can be performed by electrical control circuits to optimize the energy conversion.

### Example

In the following the figure is described more detailed by means of an example of an embodiment which is illustrated in figures 1-3, in which
Fig. 1 shows schematically an apparatus according to the invention in a perspective view,
Fig. 2 shows schematically and as a sectional view a partial area of the apparatus according to the invention, with rotating units and with stationary parts of the apparatus which are assigned to the rotating units, while
Fig. 3 shows a sectional view of the partial area of the apparatus according to Fig. 2, viewed according to sectional line III-III in Fig. 2.

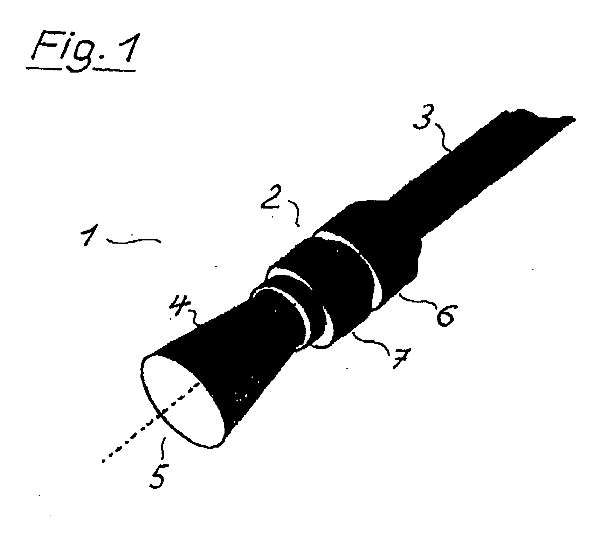

Fig. 1 shows an apparatus 1 according to the invention, which mainly consists of a bipartite tube-type turbine 2, a pressure chamber 3 which is arranged on its pressure side, that means at the entrance of the tube-type turbine 2, and a suction tube 4 which is arranged at the suction side which also is the exit of the tube-type turbine 2.

While the pressure chamber 3 has a length, which is several times of its diameter, and a cross-section which mainly is constant about its length, the cross-section of the suction tube 4 widens towards its free end 5.

The tube-type turbine 2, the pressure chamber 3 and the suction tube 4 are connected with each other and arranged at the set-up site in such a way, that they, in the case of the example, are lying in the same, mainly horizontal direction of their axles. This provides a best possible straight course of the water guidance from the entry of the water into the pressure chamber 3, respectively the tube-type turbine 2, until it leaves the suction tube 4, where the pressure chamber 3 serves for building up pressure in front of the turbine and to even out of the flow for obtaining a best possible pure irrotational flow.

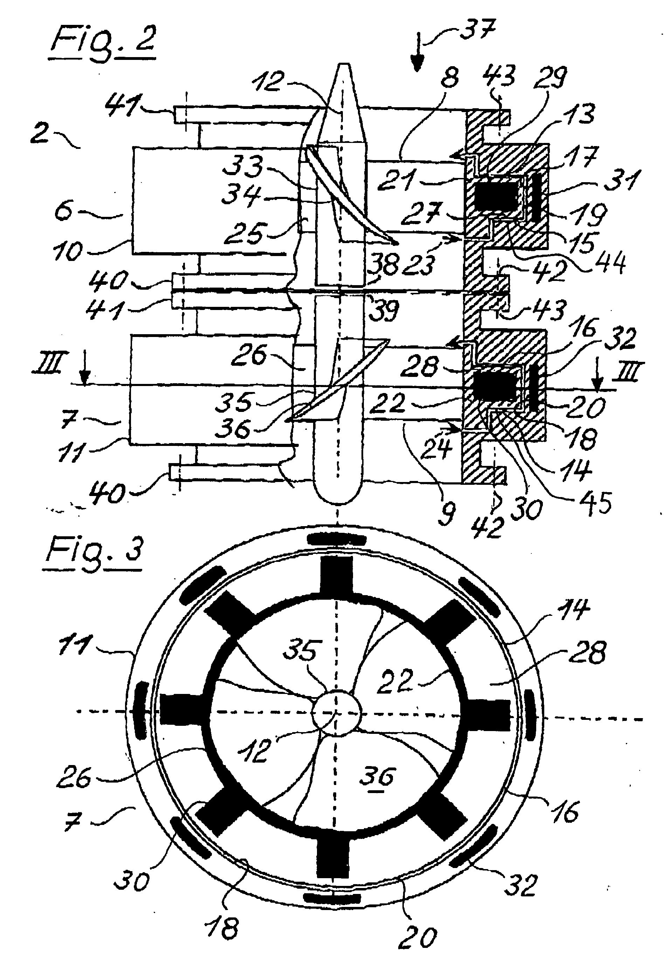

Fig. 2 shows the bipartite tube-type turbine 2 in a schematic representation and section. The tube-type turbine 2 consists of two turbine elements 6 and 7. The turbine elements 6, 7 contain a rotating unit 8 and 9, respectively, which are rotatably supported in a tube-like turbine housing 10 and 11, respectively, about a common geometric axis 12. For supporting of the rotating units 8 and 9 in the turbine housings 10 and 11, respectively, there is provided a hydrodynamic gliding-surface bearing - in the following referred to as "bearing" - 13 and 14, respectively. The bearings 13 and 14, respectively, enclose a gap 15 and 16, respectively, which contains the hydrodynamically effective liquid which so creates the hydrodynamic counter pressure and which on the one hand is formed of stationary areas 17 and 18, respectively, hence of areas of the turbine housing 10 and 11, respectively, of the apparatus 1, and on the other hand of the area 19 and 20, respectively, which are located on a rim 21 and 22, respectively, of the rotating unit 8 and 9, respectively. The gap 15 and 16, respectively, is formed so that during operation of the tube-type turbine 2 a flow through the gap 15 and 16, respectively, occurs by a part of the water which flows through the apparatus 1. In this way not only the wanted bearing effect will be obtained by formation of a corresponding counter pressure, but additionally the stator coils - and possibly also the permanent magnets of the rotor of the rotating unit 8 and 9, respectively - will be cooled. Hereby, it is possible with a corresponding design and course of the gap 15 and 16, respectively that the flow through the gap 15 and 16, respectively, occurs in a predestined direction, e.g. in that direction which is indicated by arrows 23 and 24, respectively, in Fig. 2. For obtaining such a function the theory of hydrodynamics concerning bearings gives the theoretical basis, so it is not necessary to go into constructional details in this connection.

The representation in Fig. 2 shows, that the gap 15 and 16, respectively, of the bearing 13 and 14, respectively, is formed stepwise and unsymmetrically in relation to a radial midplane of the rotating unit 8 and 9, respectively.

Additionally to the described constructional design of the bearing 13 and 14, respectively, these can be designed not only as axially effective bearings, but can also be designed for the taking of radial forces, which , with an embodiment as a tube-type turbine, are effective mainly in horizontal direction. The corresponding, not separately indicated annulus-formed areas of the flanks of the bearing 13 and 14, respectively, which on the one hand form areas of the rotating unit 8 and 9, respectively, and assigned stationary areas of the apparatus 1 on the other, but also the cylindrical areas which form the actual hydrodynamic bearing, can be coated with a friction reducing material, e.g. Teflon (trademark).

The rotating unit 8 and 9, respectively, consists of a (bladed) wheel 25, 26 respectively, said rim 21, 22 respectively, and a rotor 27, 28 respectively. The rotor 27,28 respectively contains an annular row of permanent magnets 29, 30 respectively. Around the rotor there is located a row of stator coils 31, 32 respectively, which in this way form the stator of the generator. The stator coils 31, 32 are fastened within a ring which is tight against the ring track 44, 45 respectively, in the turbine housing 10, 11. The rotor 27, 28 is connected each separately with the concerned rim 21,22 respectively, to a unit and forms the most important element together with the stator in question.

The wheel 25 mainly consists of a hub 33, non-adustable blades (vanes) 34 fixed on the hub 33, and a rim 21 which firmly connects the outer ends of the blades 34 with each other.

The wheel 26 mainly consists of a hub 35, blades (vanes) 36 which are non-adjustable, and which are fastened to the hub, and the rim 22 which connects the outer ends of the blades 36.

The blades 34 of the wheel 25 are designed so and adjusted/aligned in such a way in relation to the geometric axis 12 of the hub 33, that they have an effect on the flow according to arrow 37 hitting the pressure side of the wheel 25 in an counter-clockwise direction. The extent of this effect naturally depends mainly on of the load of the wheel 25, i.e. on the power withdrawal from the generator concerned. In contrast the blades 36 of the wheel 26 are designed so and adjusted/aligned in such a way in relation to the geometric axis 12 of the hub 35, that they have an effect on the flow, which leaves the suction side of the wheel 25 and immediately afterwards reaches the pressure side of the wheel 25, in a clockwise direction. These two wheels 25, 26 immediately following each other within the tube-type turbine 2 consequently rotate with mutually opposite directions of rotation.

The hubs 33, 35 of the wheels 25, 26 respectively, have - viewed in a radial direction - at least essentially the same cross-section and preferably enclose a relatively small space in the area of their adjacent ends 38, 39.

Further the wheels 25, 26 are preferably provided with the same number of blades 34 and 36, respectively. Also with regard to the choice of the number of permanent magnets 29 and 30, respectively, being fastened to the rotors 27, 28 preferably the same number of magnets is provided. Dependent on the individual energy conditions at the mounting place and dependent on the manner in which the electricity generation occurs by the tube-type turbine, it also can be suitable to choose the number of the blades 34 and 36, respectively, and/or the number of the permanent magnets 29 and 30, respectively, on the rotors 27, 28 of both of the turbine elements 6, 7 - or rather several turbine elements - as different. Relevant to this is also the possibility to electrically connect the coils 31 and 32, respectively, either in series or parallel.

The turbine housings 10, 11, which are arranged for containing each of a rotating unit 8, 9 respectively, is preferably designed similar, preferably annular, and are provided with cooperating connection flanges 40 and 41, respectively, with connection drill holes 42 and 43, respectively, which are indicated in the drawing and which serve for mounting of the connection bolts, not shown. In this manner it is possible, depending on a set of components, to connect two or more turbine elements with each other as well as with a suction tube and a pressure chamber, respectively, providing one end being designed correspondingly, to a complete apparatus. The turbine housings 10, 11 are dividable in a radial plane with the ring track 44, 45, so that the wheel with the rotor can be mounted and removed.

Further there can be provided known electrical circuit means in the electrical circuits of the coils - being connected in series or parallel - 31, 32 of the generators for optimizing the energy conversion by the apparatus, e.g. circuit elements for distributing of the energy withdrawal on the generators of the individual turbine elements, with a corresponding reaction on the wheel concerned and to optimize the energy yield or the total blade power.

Designed as a pump the apparatus according to the invention can be used in connection with a hydroelectric power plant or as driving unit for boats.

Also the apparatus can be designed in such a way that the wheels rotate in the same direction by insertion of a stationary element with guide blades between these wheels. Also here increasing of the efficieny can be obtained by individually controlling of the wheels. The guide blades can also be provided with an adjustable slope.

## Claims

1. An apparatus (2) for a tube-type turbine for converting stored potential energy of a liquid into electrical energy or vice versa, the apparatus (2) comprising a pair of rotating units (8,9) and respective stationary housings (10, 11), the rotating units (8, 9) being housed in the stationary housings (10, 11), each rotating unit (8, 9) comprising:
a wheel (25/26) arranged to be rotatable about a rotation axis (12) with respect to their respective stationary housing (10/11), each wheel (25, 26) comprising blades (34, 36) and each being connected to a respective generator/motor to be mutually independently controllable with regard to rotational speed/electrical power, the rotation of the wheels (25, 26), via interaction of the blades (34, 36) with the liquid, being used in converting the energy,
and wherein the apparatus (2) is arranged such that the wheels (25, 26) are arranged to have a common rotation axis (12) to be mutually independently rotatable with respect to one another, and wherein the blades (34, 36) of the wheels (25, 26) have opposing slopes,
and **characterised in that** the wheels (25, 26) of the respective rotating units (8, 9) are arranged to be unsupported at the rotation axis (12) and to be supported by bearings (13, 14) provided by the stationary housings (10, 11), and wherein the bearings (13, 14) are hydrodynamic bearings formed by virtue of the liquid contained between the wheels (25, 26) and the stationary housings (10, 11) during rotation of the wheels (25, 26).

2. An apparatus (2) according to claim 1 wherein the stationary housings (10, 11) each comprise stator coils (31, 32) which are arranged to be cooled by the hydrodynamic bearing liquid.

3. An apparatus (2) according to any preceding claim, wherein the rotating units (8, 9) also comprise permanent magnets (29, 30) which are arranged to be cooled by the hydrodynamic bearing liquid.

4. An apparatus (2) according to any preceding claim, wherein the rotating units (8, 9) are arranged with the stationary housings (10, 11) such that a gap (15, 16) is formed therebetween, the gap (15, 16) being used to create respective hydrodynamic bearings.

5. An apparatus (2) according to any preceding claim, wherein the apparatus (2) has a first state and a second state, the apparatus being arranged such that:
in the first state, the wheels (25, 26) engage with the stationary housings (10, 11); and
in the second state, the wheels (25, 26) are suspended away from the stationary housings (10, 11) by the respective hydrodynamic bearings.

6. An apparatus (2) according to any preceding claim, wherein the wheels are arranged to be contra-rotating.

7. An apparatus (2) according to any preceding claim, wherein the rotor (27) of the generator or motor, respectively, contains a rim (21) which connects the outer ends of the blades (34) of each wheel (25), so that the wheel (25), the rim (21) and the field magnets of the rotor (27) form the rotating unit (8), which rotates in water in an annular groove (44, 45) in the water content of the apparatus.

8. An apparatus (2) according to claim 7, wherein the field magnets are permanent magnets.

9. An apparatus (2) according to claim 7 or 8, wherein the coils of the generator or motor, respectively, are placed around the rotor (27) at the annular groove (44,45).

10. An apparatus (2) according to claim 7, wherein the rim (21) of the rotor (27) is contained in an axial bearing (13,14) at the edge of the annular groove (44, 45) opposite the water channel of the apparatus.

11. An apparatus (2) according to any preceding claim, wherein the stationary housings (10, 11) provide a water channel for each wheel which comprises a flange-bearing (40, 41) tube element which can, with corresponding flange-bearing ends, be arranged in a pipeline.

12. An apparatus (2) according to claim 7, wherein the flange-bearing tube element (10, 11) can be divided in a cross direction in the central area of the stator for mounting of the rotor (27).

13. An apparatus (2) according to claim 7 or 8, wherein the stationary housings each provide a flange-bearing tube element which forms a modular unit set up for the assembly of several of such successive modular units with changing directions of rotation of the included wheels.

14. An apparatus (2) according to claim 13, wherein the hub (33) of the wheel has approximately the same length as the flange-bearing tube element and the same outer diameter for all modular units.

15. An apparatus (2) according to any preceding claim, wherein the apparatus is arranged such that the wheels rotate in the same direction by insertion of stationary guide blades between neighbouring wheels.

16. A pump for the driving of boats comprising the apparatus (2) of any preceding claim.

## Patentansprüche

1. Vorrichtung (2) für eine röhrenartige Turbine zum Umwandeln gespeicherter potenzieller Energie einer Flüssigkeit in elektrische Energie oder umgekehrt, wobei die Vorrichtung (2) ein Paar Rotationseinheiten (8, 9) und entsprechende stationäre Gehäuse (10, 11) umfasst, wobei die Rotationseinheiten (8, 9) den stationären Gehäusen (10, 11) innewohnen, wobei jede Rotationseinheit (8, 9) Folgendes umfasst:
ein Rad (25/26), das derart angeordnet ist, dass es in Bezug auf sein entsprechendes stationäres Gehäuse (10/11) um eine Rotationsachse (12) rotierbar ist, wobei jedes Rad (25, 26) Schaufeln (34, 36) umfasst und jedes mit einem entsprechenden Generator/Motor verbunden ist, um in Bezug auf die Rotationsgeschwindigkeit / elektrische Energie wechselseitig unabhängig steuerbar zu sein, wobei die Rotation der Räder (25, 26) über ein Zusammenwirken der Schaufeln (34, 36) mit der Flüssigkeit zum Umwandeln der Energie verwendet wird,
und wobei die Vorrichtung (2) derart angeordnet ist, dass die Räder (25, 26) derart angeordnet sind, dass sie eine gemeinsame Rotationsachse (12) aufweisen, die in Bezug auf einander wechselseitig unabhängig rotierbar sind, und wobei die Schaufeln (34, 36) der Räder (25, 26) gegensätzliche Neigungen aufweisen,
und **dadurch gekennzeichnet, dass** die Räder (25, 26) der entsprechenden Rotationseinheiten (8, 9) derart angeordnet sind, dass sie an der Rotationsachse (12) ungestützt sind und von Lagern (13, 14), welche von den stationären Gehäusen (10, 11) bereitgestellt sind, gestützt werden, und wobei die Lager (13, 14) hydrodynamische Lager sind, die durch die Wirkung des Wasser ausgebildet sind, das während der Rotation der Räder (25, 26) zwischen den Rädern (25, 26) und den stationären Gehäusen (10, 11) enthalten ist.

2. Vorrichtung (2) nach Anspruch 1, wobei die stationären Gehäuse (10, 11) jeweils eine Statorspule (31, 32) umfassen, die derart angeordnet ist, dass sie von der Flüssigkeit des hydrodynamischen Lagers gekühlt wird.

3. Vorrichtung (2) nach einem der vorstehenden Ansprüche, wobei die Rotationseinheiten (8, 9) ferner Permanentmagnete (29, 30) umfassen, die derart angeordnet sind, dass sie von der Flüssigkeit des hydrodynamischen Lagers gekühlt werden.

4. Vorrichtung (2) nach einem der vorstehenden Ansprüche, wobei die Rotationseinheiten (8, 9) derart an den stationären Gehäusen (10, 11) angeordnet sind, dass dazwischen ein Spalt (15, 16) ausgebildet ist, wobei der Spalt (15, 16) verwendet wird, um entsprechende hydrodynamische Lager zu erzeugen.

5. Vorrichtung (2) nach einem der vorstehenden Ansprüche, wobei die Vorrichtung (2) einen ersten Zustand und einen zweiten Zustand aufweist, wobei die Vorrichtung derart angeordnet ist, dass:
in dem ersten Zustand die Räder (25, 26) die stationären Gehäuse (10, 11) in Eingriff nehmen; und
in dem zweiten Zustand die Räder (25, 26) durch die entsprechenden hydrodynamischen Lager von den stationären Gehäusen (10, 11) weggeschoben werden.

6. Vorrichtung (2) nach einem der vorstehenden Ansprüche, wobei die Räder derart angeordnet sind, dass sie gegenläufig rotieren.

7. Vorrichtung (2) nach einem der vorstehenden Ansprüche, wobei der Rotor (27) des entsprechenden Generators oder Motors einen Rand (21) enthält, der die äußeren Enden der Schaufeln (34) jedes Rads (25) verbindet, sodass das Rad (25), der Rand (21) und die Feldmagneten des Rotors (27) die Rotationseinheit (8) bilden, die in Wasser in einer ringförmigen Nut (44, 45) in dem Wasserbestand der Vorrichtung rotiert.

8. Vorrichtung (2) nach Anspruch 7, wobei die Feldmagneten Permanentmagneten sind.

9. Vorrichtung (2) nach Anspruch 7 oder 8, wobei die Spulen des entsprechenden Generators oder Motors um den Rotor (27) herum an der ringförmigen Nut (44, 45) angeordnet sind.

10. Vorrichtung (2) nach Anspruch 7, wobei der Rand (21) des Rotors (27) in einem Axiallager (13, 14) an der Kante der ringförmigen Nut (44, 45) gegenüber dem Wasserkanal der Vorrichtung enthalten ist.

11. Vorrichtung (2) nach einem der vorstehenden Ansprüche, wobei die stationären Gehäuse (10, 11) einen Wasserkanal für jedes Rad bereitstellen, das ein Flanschlager- (40, 41) Röhrenelement umfasst, das mit entsprechenden Flanschlagerenden in einer Rohrleitung angeordnet werden kann.

12. Vorrichtung (2) nach Anspruch 7, wobei das Flanschlagerröhrenelement (10, 11) zum Befestigen des Rotors (27) in dem zentralen Bereich der Spule in Querrichtung geteilt werden kann.

13. Vorrichtung (2) nach Anspruch 7 oder 8, wobei die stationären Gehäuse jeweils ein Flanschlagerröhrenelement bereitstellen, das eine Moduleinheiteneinrichtung für das Anordnen mehrerer derartiger aufeinanderfolgender Moduleinheiten mit unterschiedlichen Rotationsrichtungen der enthaltenen Räder bildet.

14. Vorrichtung (2) nach Anspruch 13, wobei die Radnabe (33) ungefähr dieselbe Länge wie das Flanschlagerröhrenelement und für alle Moduleinheiten denselben Außendurchmesser aufweist.

15. Vorrichtung (2) nach einem der vorstehenden Ansprüche, wobei die Vorrichtung derart angeordnet ist, dass die Räder durch den Einsatz stationärer Leitschaufeln zwischen benachbarten Rädern in derselben Richtung rotieren.

16. Pumpe zum Antreiben von Booten, umfassend die Vorrichtung (2) nach einem der vorstehenden Ansprüche.

## Revendications

1. Appareil (2) pour une turbine de type tube pour convertir une énergie potentielle stockée d'un liquide en énergie électrique ou inversement, l'appareil (2) comprenant une paire d'unités rotatives (8, 9) et des logements stationnaires respectifs (10, 11), les unités rotatives (8, 9) étant logées dans les logements stationnaires (10, 11), chaque unité rotative (8, 9) comprenant :
une roue (25/26) conçue pour pouvoir tourner autour d'un axe de rotation (12) par rapport à son logement stationnaire respectif (10/11), chaque roue (25, 26) comprenant des aubes (34, 36) et chacune étant reliée à un générateur/moteur respectif pour pouvoir être commandées indépendamment les unes des autres par rapport à la vitesse de rotation/énergie électrique, la rotation des roues (25, 26), par l'interaction des aubes (34, 36) avec le liquide, étant utilisée dans la conversion de l'énergie,
et dans lequel l'appareil (2) est disposé de sorte que les roues (25, 26) soient conçues pour avoir un axe de rotation commun (12) pour pouvoir tourner indépendamment les unes des autres, et dans lequel les aubes (34, 36) des roues (25, 26) présentent des pentes opposées,
et **caractérisé en ce que** les roues (25, 26) des unités rotatives respectives (8, 9) sont conçues pour ne pas être supportées au niveau de l'axe de rotation (12) et pour être supportées par des paliers (13, 14) fournis par les logements stationnaires (10, 11), et dans lequel les paliers (13, 14) sont des paliers hydrodynamiques formés en raison du liquide contenu entre les roues (25, 26) et les logements stationnaires (10, 11) durant la rotation des roues (25, 26).

2. Appareil (2) selon la revendication 1 dans lequel les logements stationnaires (10, 11) comprennent chacun des bobines de stator (31, 32) qui sont conçues pour être refroidies par le liquide du palier hydrodynamique.

3. Appareil (2) selon l'une quelconque des revendications précédentes, dans lequel les unités rotatives (8, 9) comprennent également des aimants permanents (29, 30) qui sont conçus pour être refroidis par le liquide du palier hydrodynamique.

4. Appareil (2) selon l'une quelconque des revendications précédentes, dans lequel les unités rotatives (8, 9) sont disposées avec les logements stationnaires (10, 11) de sorte qu'un espace (15, 16) se forme entre eux, l'espace (15, 16) étant utilisé pour créer des paliers hydrodynamiques respectifs.

5. Appareil (2) selon l'une quelconque des revendications précédentes, l'appareil (2) présentant un premier état et un deuxième état, l'appareil étant disposé de sorte que :
dans le premier état, les roues (25, 26) viennent en prise avec les logements stationnaires (10, 11);
et
dans le deuxième état, les roues (25, 26) soient suspendues à distance des logements stationnaires (10, 11) par les paliers hydrodynamiques respectifs.

6. Appareil (2) selon l'une quelconque des revendications précédentes, dans lequel les roues sont conçues pour être contrarotatives.

7. Appareil (2) selon l'une quelconque des revendications précédentes, dans lequel le rotor (27) du générateur ou du moteur, respectivement, contient un rebord (21) qui se connecte aux extrémités extérieures des aubes (34) de chaque roue (25), de sorte que la roue (25), le rebord (21) et les aimants de champ du rotor (27) forment l'unité rotative (8), qui tourne dans l'eau dans une rainure annulaire (44, 45) dans le contenant d'eau de l'appareil.

8. Appareil (2) selon la revendication 7, dans lequel les aimants de champ sont des aimants permanents.

9. Appareil (2) selon la revendication 7 ou 8, dans lequel les bobines du générateur ou du moteur, respectivement, sont placées autour du rotor (27) au niveau de la rainure annulaire (44, 45).

10. Appareil (2) selon la revendication 7, dans lequel le rebord (21) du rotor (27) est contenu dans un palier axial (13, 14) au bord de la rainure annulaire (44, 45) en face du canal d'eau de l'appareil.

11. Appareil (2) selon l'une quelconque des revendications précédentes, dans lequel les logements stationnaires (10, 11) fournissent un canal d'eau pour chaque roue qui comprend un élément de tube de palier à bride (40, 41) qui peut, avec des extrémités de palier à bride correspondantes, être disposé dans une conduite.

12. Appareil (2) selon la revendication 7, dans lequel l'élément de tube de palier à bride (10, 11) peut être divisé dans une direction transversale dans la zone centrale du stator pour le montage du rotor (27).

13. Appareil (2) selon la revendication 7 ou 8, dans lequel les logements stationnaires fournissent chacun un élément de tube de palier à bride qui forme une unité modulaire configurée pour l'assemblage de plusieurs de ces unités modulaires successives avec des sens de rotation changeants des roues incluses.

14. Appareil (2) selon la revendication 13, dans lequel le moyeu (33) de la roue a environ la même longueur que l'élément de tube de palier à bride et le même diamètre extérieur pour toutes les unités modulaires.

15. Appareil (2) selon l'une quelconque des revendications précédentes, l'appareil étant conçu de sorte que les roues tournent dans le même sens par l'insertion d'aubes fixes de guidage entre des roues voisines.

16. Pompe pour l'entraînement de bateaux comprenant l'appareil (2) selon l'une quelconque des revendications précédentes.
